# EUROPEAN PATENT APPLICATION

(11) **EP 2 787 441 A1**
(43) Date of publication of application: **08.10.2014**
(21) Application number: 11876662.5
(22) Date of filing: 30.11.2011
(51) Int. Cl.: G06F 11/34

(54) **MEMORY DUMP COLLECTION TECHNIQUE**

(71) Applicant: Hitachi, Ltd., Tokyo 100-8280 (JP)
(72) Inventor: IKEDA Takahiro, Chiyoda-ku, Tokyo 100-8280 (JP)
(74) Representative: MERH-IP Matias Erny Reichl Hoffmann
(86) International application number: PCT/JP2011/077600
(87) International publication number: WO 2013/080313

(57) **Abstract**

The present invention reduces the time required to collect and save an entire memory image, and shortens the time until a system resumes providing services. The operating system computes hashes for memory areas in units of pages, the results of which are stored in a memory hash table, the hash values in the memory hash table are initialized, a memory image is copied to an external storage device for the first time, a hash value in the memory hash table and the memory image in the external storage device are updated with respect to a change location in the system memory, a memory area where a write occurred after the last save to the external storage device is detected, a dump request is issued, and the dump request is processed.

## Description

### Technical Field

The present invention relates to an information processing apparatus and a memory dump collection method that is applied to such an apparatus.

### Background Art

A memory dump collection method or apparatus that performs information gathering once a computer system has failed has so far existed.

Conventionally, in case a fault occurred in a computer system and the system stopped, saving a memory image (memory dump collection) at the time of the fault occurrence, which is effective for investigating the cause of the fault, is started after the fault occurred and all the contents of a memory installed in the system are dumped and saved.

It was arranged that a system reboot could be performed upon the completion of memory dump collection. As an example of a function that implements such a dump collection function in a Linux (registered trademark) operation system, Non-patent Literature 1 exists among others.

Lately, however, the capacity of a memory installed in a computer system has increased more and more and it takes much time to dump and save all memory images. Consequently, there occurs a situation where it takes a long time until the system restarts providing services.

To address such a problem, in Patent Literature 1, an attempt is made to shorten the time taken until the start of a reboot by dumping only a core part (which is memory resident) of an operating system and starting a reboot and, after the reboot, if the operating system tries to allocate a memory page not dumped, executing a dump output of the memory page before allocating the memory page.

### Citation List

### Patent Literature

Patent Literature 1: Japanese Patent Application Publication No. 10-333944

Non-patent Literature 1: kdump http://lse.sourceforge. net/kdump/

### Summary of Invention

### Technical Problem

However, in the method of Patent Literature 1, each time a memory page is allocated, judgment needs to be made as to whether or not that page has been dumped. This leads to an overhead in memory page allocation processing.

Because memory page allocation processing occurs very frequently, this overhead decreases the processing performance of the system.

Since an operating system generally executes allocation of a lot of memory pages in an initialization processing phase, dump output processing takes place frequently during the initialization processing. Even if a reboot is started early, the initialization processing takes a long time and it takes a long time until the system restarts providing services.

Because dumps are executed gradually after a reboot, the memory allocation processing which should normally be completed in a short time would take a long time and it would be difficult to estimate the system performance (particularly, real-time performance).

Also, there is a possibility that a severe fault may cause the entire system to stop and dump output processing itself becomes inexecutable. In case a severe system error should occur, investigation into the cause of the error is important. But, memory image dumping that is the most effective means for investigating the cause is inexecutable, so it would take a lot of time to investigate the cause.

An object of the present invention, which has been contrived in view of the above discussed circumstances, is to provide a memory dump collection method that dumps all memory images without any omission in a short time even in case of system down due to a severe system error without affecting an operating system at all after a reboot.

### Solution to Problem

A main aspect of the present invention that achieves the above object resides in a computer system that manages data in virtual memory of an operating system on a per-page basis, the computer system including a memory hash table that stores calculation results obtained by calculating a hash of each of pages which are units of area divisions of a memory of the operating system; a memory hash table initialization function that executes initialization of hash values which are stored in the memory hash table by calculating a hash from storage contents of the system memory on a per-page basis; initial dump to an external storage device that copies memory images to the external storage device for the first time; a memory hash table update function that executes an update of a hash value in the memory hash table and of a memory image in the external storage device relevant to an area where a change has occurred in the system memory; a hash value comparison function that detects a memory area where a write has occurred after last data saving to the external storage device and issues a dump request; and a dump output function that executes the dump request.

By updating a hash value in the memory hash table and a memory image in the external storage device when the system is operating and, when a dump is executed, by dumping only an area for which there is a mismatch between a hash value calculated from the memory contents and a corresponding hash value in the memory hash table, all system memory images upon a dump request can be dumped to the external storage device. Thereby, the dump time can be reduced.

Other problems and solutions to them, which are disclosed in the present application, will be apparent from the section of embodiments of the invention and the drawings.

### Advantageous Effects of Invention

According to the present invention, when a fault has occurred in the operating system, it is possible to save all memory images which may become necessary for fault analysis and saving can be completed in a short time, not proportional to a total amount of data contained in the memory, and it is possible to reboot and reinitialize the operating system rapidly and restart proving services.

### Brief Description of Drawings

Fig. 1 is a diagram depicting a configuration example of a computer system of an embodiment disclosed herein.
Fig. 2 is a diagram representing a structure example of a memory hash table of an embodiment disclosed herein.
Fig. 3 is a diagram explaining a memory hash table initialization function of an embodiment disclosed herein.
Fig. 4 is a diagram explaining a function of initial dump to external storage of an embodiment disclosed herein.
Fig. 5 is a diagram explaining a memory hash table update function of an embodiment disclosed herein.
Fig. 6 is a diagram explaining a hash value comparison function of an embodiment disclosed herein.
Fig. 7 is a diagram explaining a dump output function of an embodiment disclosed herein.
Fig. 8 is a diagram representing a structure example of a dump request management table of an embodiment disclosed herein.
Fig. 9 is a diagram explaining a memory protection method (1) of an embodiment disclosed herein.
Fig. 10 is a diagram explaining a page fault handling function (1) of an embodiment disclosed herein.
Fig. 11 is a diagram explaining a memory protection method (2) of an embodiment disclosed herein.
Fig. 12 is a diagram explaining a page fault handling function (2) of an embodiment disclosed herein.
Fig. 13 is a diagram explaining a method for reducing the amount of data to be dumped using memory hash tables.

### Description of Embodiments

### (System Configuration)

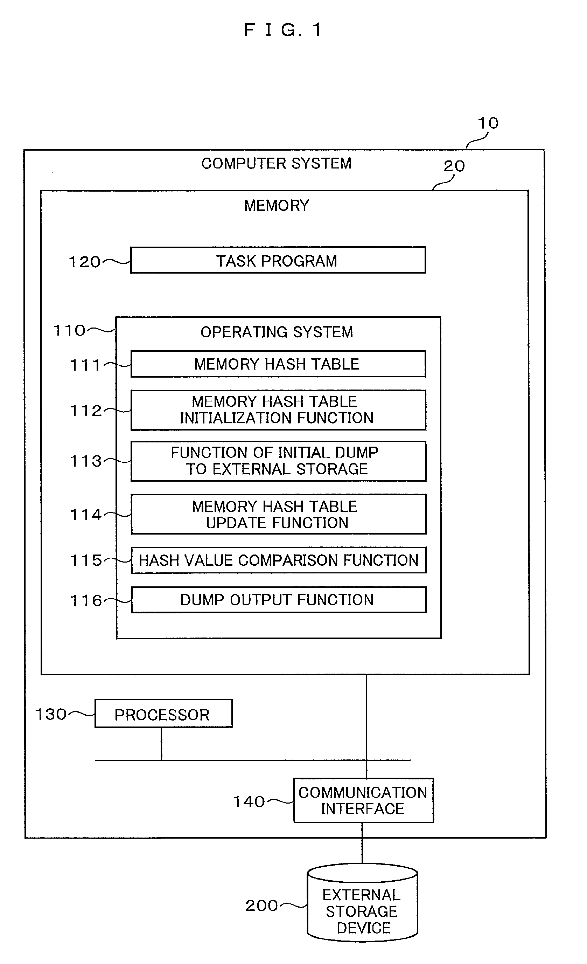

In the following, embodiments will be described in detail with the aid of the drawings. Fig. 1 is a configuration diagram of a computer system 10 of an embodiment disclosed herein.

The computer system 10 is a computer system with an operating system whose components are loaded in a memory and operates with a single or a plurality of processors 130.

The computer system 10 is equipped with a communication interface 140 and the computer system 10 and an external storage device 200 are interconnected.

The external storage device 200 is connected to the computer system 10 via the communication interface 140 provided on the computer system 10 and used as a dump destination to which the contents of the memory are to be dumped during a dump process which will be described later. Therefore, it should have an entire storage area larger than that of the memory 20.

In the present embodiment, the computer system 10 is a general computer system in which an operating system 110 and a task program 120 runs in the memory 20 of the computer system 10.

The operating system 110 includes a memory hash table 111 that associates and stores a page frame number and a hash value of the page frame, a memory hash table initialization function 112 that initializes hash values mapped to the respective page frame numbers stored in the memory hash table, a function of initial dump to external storage 113 that executes an initial memory dump to the external storage device 200, a memory hash table update function 114 that executes an update of the memory hash table and of memory images in the external storage device upon occurrence of a write to the memory 20 when the system is operating, a hash value comparison function 115 that detects a memory area where a write has occurred after last data saving to the external storage device and issues a dump request, and a dump output function 116 that dumps memory images to the external storage device 200.

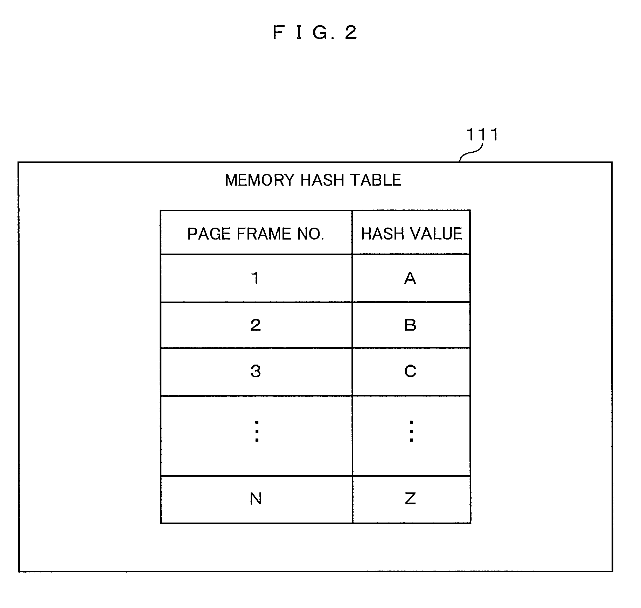

Fig. 2 is a diagram representing a structure example of the memory hash table 111. Page frame numbers correspond to the memory's page frame numbers managed by the operating system 110. A hash value is obtained by calculating a hash for the contents of a memory area mapped to a page frame number.

Calculating a hash value may be executed either when the system is booted or when the system is operating. A change may be made to the contents of the memory even during hash value calculation.

There is a possibility that collision between hash values (two hash values complete) occurs. However, in the present method, it is assumed that hash value calculation is executed so that no collision occurs between a hash value currently stored in the memory hash table 111 and a hash value resulting from recalculation, if both hash values are associated with the same page frame number. However, a collision between hash values associated with different page frame numbers could occur well.

### (Description of Processes)

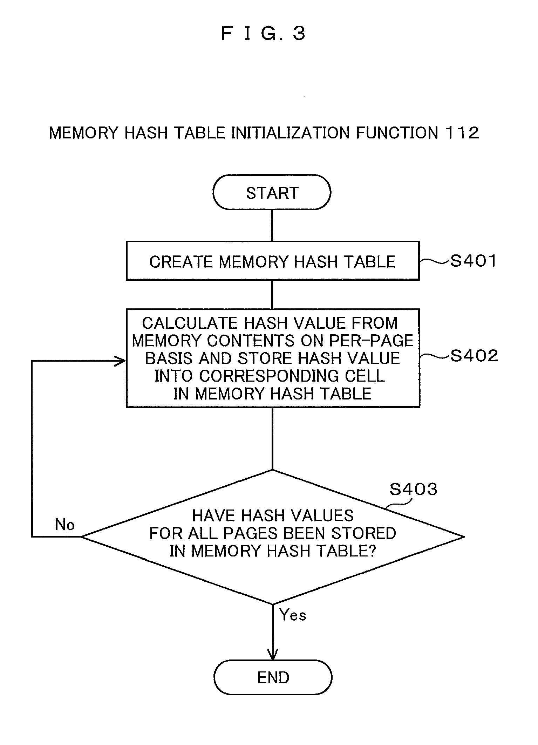

Fig. 3 is a diagram explaining a memory hash table initialization process 112.

As noted previously, initialization of the memory hash table 111 is executed when the system is booted or the system is operating. As the memory contents change every moment when the system is operating, there is a possibility that the contents of a page frame that was already initialized changes after it was initialized, making a difference between its hash value stored in the memory hash table 111 and a hash value calculated from that page frame of the memory 20. However, in the present method, each time the contents of a page frame are updated, its hash value in the memory hash table 111 is updated frequently and, thus, no problem is posed.

Initialization of the memory hash table 111 begins with creating a memory hash table 111 (S401). In this table, there are as many page frame numbers as page frame numbers for memory management; using the page frame numbers, the operating system manages the memory 20 provided in the computer system 10. Then, a hash value is calculated from the contents of a page of the memory 20 corresponding to one of these page frame numbers and the hash value is stored into the memory hash table 111 (S402). The step of S402 needs to be executed for all page frames and the step of S402 is executed with respect to all page frames, while the page frame number is incremented by one (S403). Upon the completion of the execution for all page frames, the initialization of the memory hash table 111 terminates.

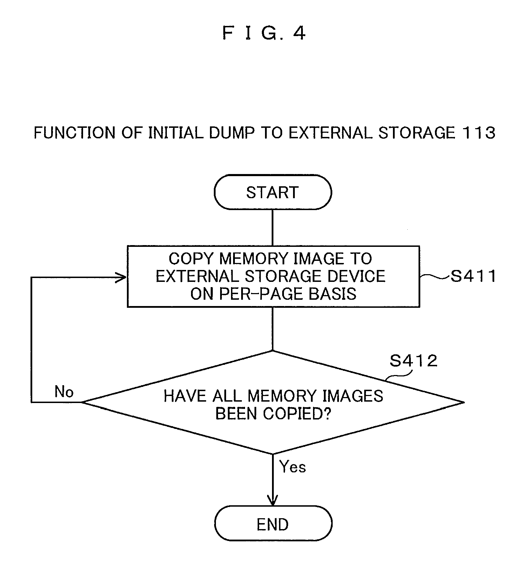

Fig. 4 is a diagram explaining the function of initial dump to external storage 113. Here, the initial dump refers to copying memory images to the external storage device for the first time. This process is executed, whether or not a dump command is issued.

Because it is assumed that the memory is dumped on a per-page basis in the present method, memory dump to the external storage device is also performed on a per-page basis (S411). The step of S411 is repeated until the completion of copying the memory images of all memory pages to the external storage device (S412).

Initial dump to the external storage device may be executed either when the system is booted or when the system is operating, as is the case for initialization of the memory hash table 111. This is because an update is made when the system is operating, as is the case for hash values in the memory hash table 111. However, it is desirable that dump should be completed rapidly and the function of initial dump to external storage 113 should be completed before a dump command is issued during actual system operation.

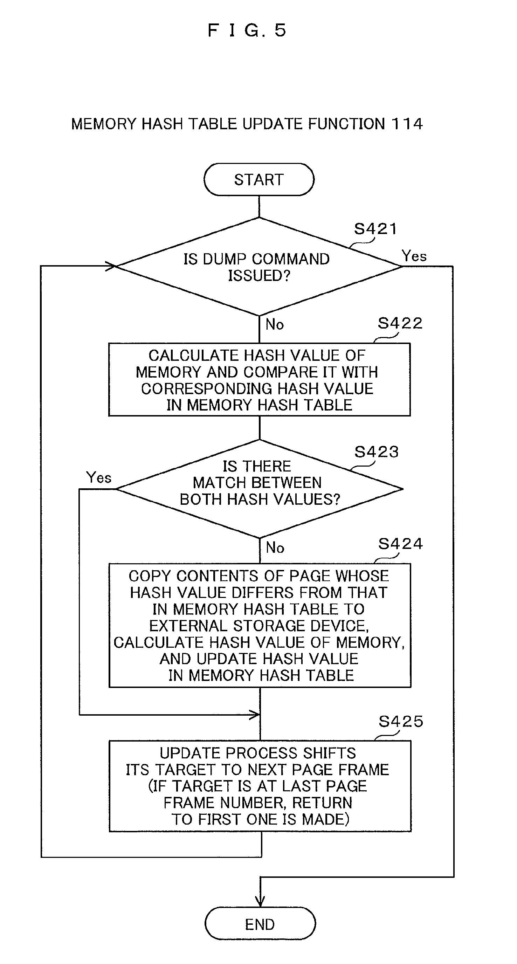

Fig. 5 is a diagram explaining the memory hash table update function 114. Because a write to a memory area occurs when the system is operating, hash values set by initialization of the memory hash table 111 and memory images dumped by initial dump to external storage, as described previously, may differ from those of the memory in the current state.

Thus, this process updates a hash value in the memory hash table and dumps a differential part of the memory contents to the external storage device so as to make the hash values reflecting the memory contents match with the hash values in the memory hash table and make the memory images match with the memory images dumped to the external storage device.

The memory hash table update function 114 first checks to see whether a dump command is issued (S421). The update process calculates a hash value of the memory and compares the hash value with a corresponding hash value mapped to a page frame number in the memory in the memory hash table (S422) (S423). If there is a match between both hash values, it can be judged that no write has been done to a memory area for which the hash value was calculated. Thus, the update process shifts its target page frame to a next page frame (S425) and returns to step 412; then, for another page frame, it calculates a hash value of the memory and compares the hash value with a corresponding hash value in the memory hash table. If there is a mismatch between both hash values, the process judges that a write has been done to a memory area for which the hash value was calculated, updates the corresponding hash value in the memory hash table 111 to the calculated hash value, and dumps the memory image of the page frame to the external storage device (S424). Subsequently, the update process shifts its target page frame to a next page frame (S425) and executes update processing in the same way.

The memory hash table update function 114 should always be executed when the system is operating, unless a dump command is issued.

Accordingly, even when a dump command is not issued, the latest updated memory images are saved to the external storage and memory dump images for fault analysis can be acquired. It is thus possible to prevent lengthening of investigation into a cause when a dump output process is not executed.

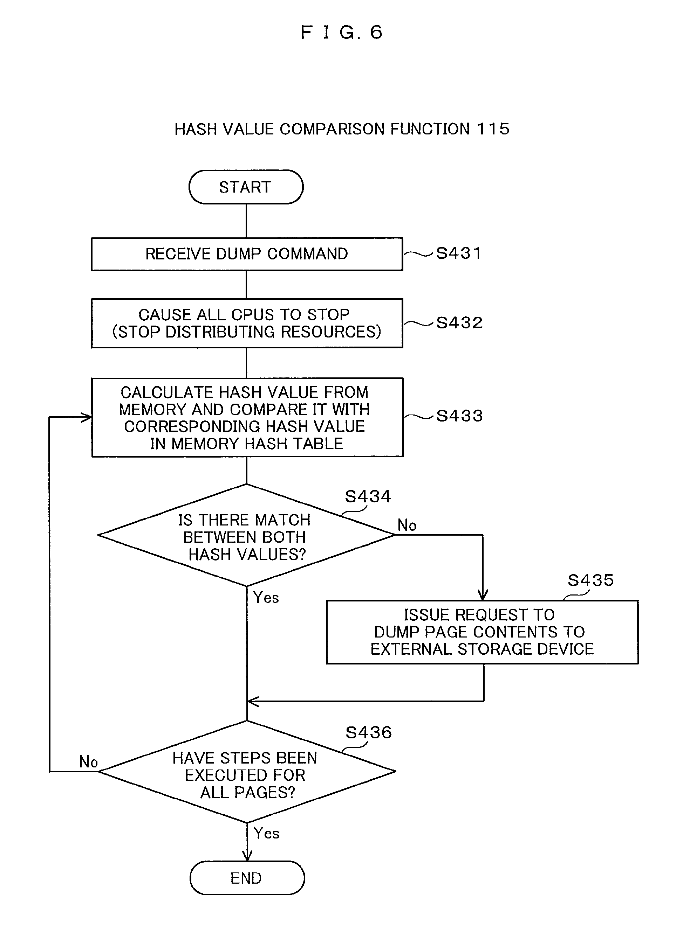

Fig. 6 is a diagram explaining the hash value comparison function 115. The diagram illustrates a process to issue a dump request to dump a memory area where a write has occurred after last data saving to the external storage device.

Upon receiving a dump command (S431), the process immediately causes all processors 130 to stop writing to the memory area to be dumped so that no change is made to the memory image at the time when the process has received the dump command (S432).

Then, the process calculates a hash value for each page of the memory and compares the hash value with a hash value mapped to the corresponding page frame number in the memory hash table (S433, S434).

If there is a match between both hash values of the page, it is regarded that no write has been done to the area after the updates of the memory hash table and the external storage device were executed and it is not required to dump the memory image to the external storage device.

On the other hand, if there is a mismatch between both hash values of the page, it is regarded that a write has been done to an area in the page after the updates of the memory hash table and the external storage device were executed and, thus, the process issues a request to dump the page contents to the external storage device (S435).

The process executes the steps S433 to S435 for all pages (S436).

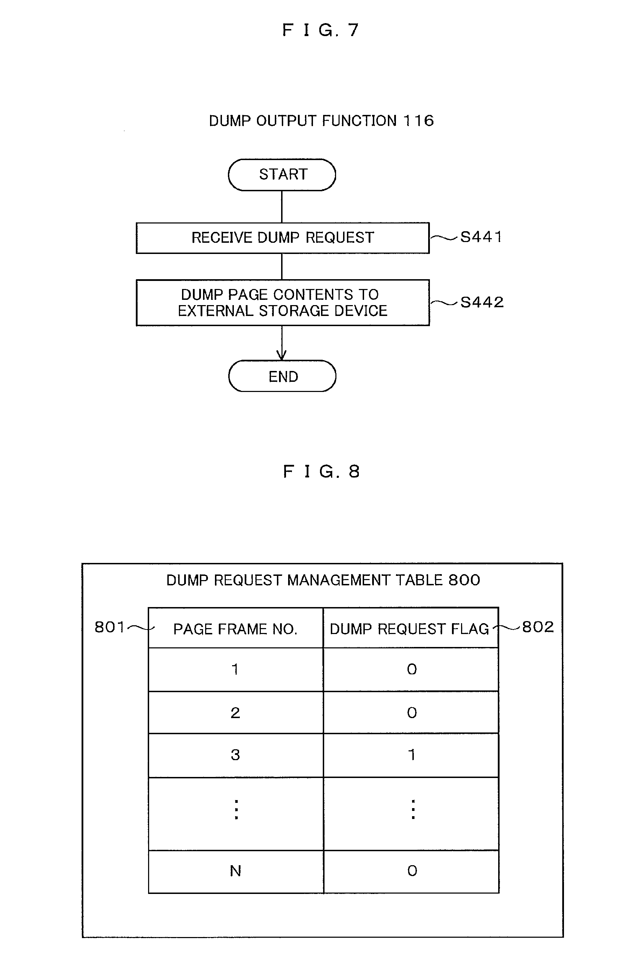

Fig. 7 is a diagram explaining the dump output function 116.

In the present embodiment, the dump output function writes dumps to the external storage device 200 connected to the system through the use of the communication interface 140 provided on the computer system 10.

The dump output function receives a dump request issued by the hash value comparison function 115 at step S435 (S441) and dumps the page contents to the external storage device (S442).

As described previously, when a write to the memory 20 occurs when the system is operating, the write is detected by a hash value in the memory hash table 111, the hash value in the memory hash table 111 is updated, and the associated memory image stored in the external storage device 200 is updated. When a dump command is issued, only a particular memory area has to be dumped. Thereby, the dumps of all memory areas at the time when the dump command has been issued are saved.

Accordingly, it follows that the dump time is shortened significantly as compared with a method that dumps all memory areas from the time of issuance of a dump command and the dump process does not draw out after a reboot of the system. It is thus possible to reduce the time until the system restarts services after rebooted as compared with the so far commonly used method.

The foregoing assumes that a dump command is issued when the system has failed and the system is unable to continue services. However, it is not always true that a dump command is issued only when the system has failed. There is a possibility that a system maintenance operator or the like issues a dump command explicitly, as the operator wants to save memory images at the present time.

In a case where an explicit dump command is issued, no system fault occurs and there is a demand that the operator wants to save dumps while allowing services to continue. In this case, it is impossible by the foregoing method to save exact memory images at the time of issuance of a dump command. This is because a write to a memory area occurs every moment by a service that is operating even during the execution of hash value comparison.

It is possible to solve the above problem by using a memory protection function and a page fault handling function, which are hitherto known techniques, of the operating system 110, and adding a table for dump request management.

Fig. 8 is a diagram representing a structure example of a dump request management table 800 that is managed by the operating system 110 in the memory 20 in Fig. 1. Page frame numbers 801 correspond to those in the memory hash table 111. A damp request flag 802 indicates whether or not a dump request is issued to dump the page mapped to it.

To implement a process flow in which an explicit dump command is issued and the contents of the memory 20 are dumped to the external storage device 200 while services continue, two methods are described below in the present embodiment.

One method is to write protect all areas of the memory 20 upon having received a dump command, check a hash value of each page, and determine whether or not to dump the page (Method 1). The other method is to write protect only a particular area (a page for which the flag is 1) of the memory 20 upon receiving a dump command (Method 2). With these ways of applying write protection, page fault exception handling when a write request has been made for writing to a write protected page differs. Processing in each case is described.

For Method 1 (dump request flags are preset) and Method 2 (a dump request flag is set during processing), their processes are outlined below.

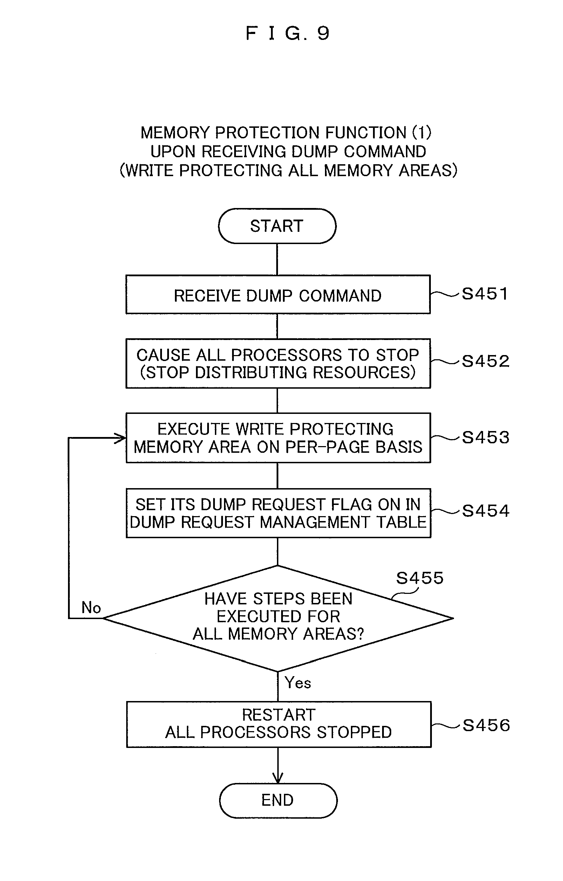

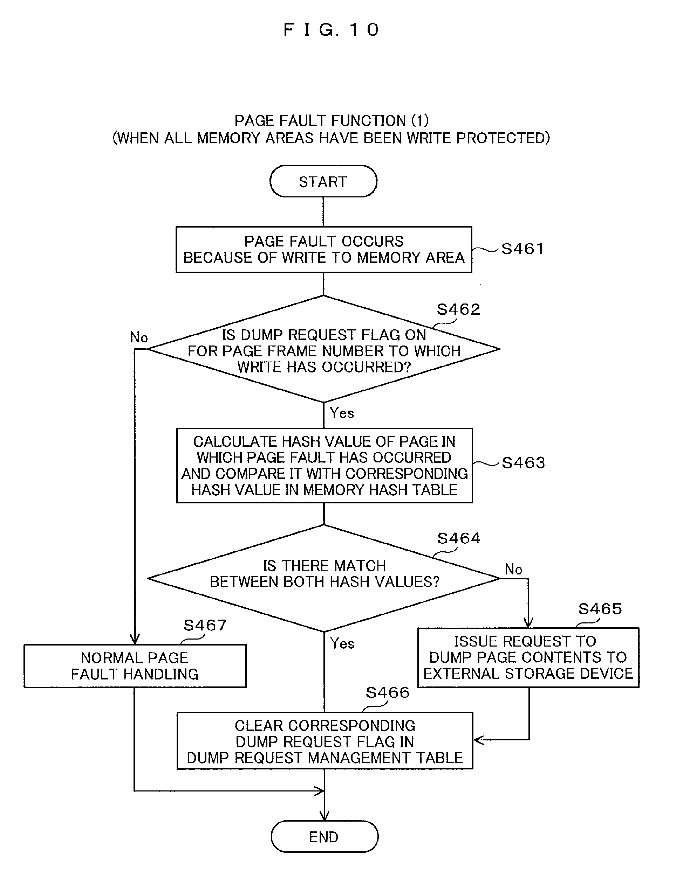

### (Method 1, Figs. 9 and 10)

(1) Process receives a dump request from a user (S451).
(2) Process write protects all memory areas (S453).
(3) Process sets dump request flags ON for all memory areas (S454).
(4) A page fault exception occurs when the memory is accessed (S461).
(5) Process calculates a hash value of a page in which the page fault exception has occurred and compares the hash value with a corresponding hash value stored in the memory hash table (S463).
(6) As a result of the comparison, if there is a match between both hash values, the process does not dump the page; if there is a mismatch between both hash values, the process dumps the page (S464 to S466).

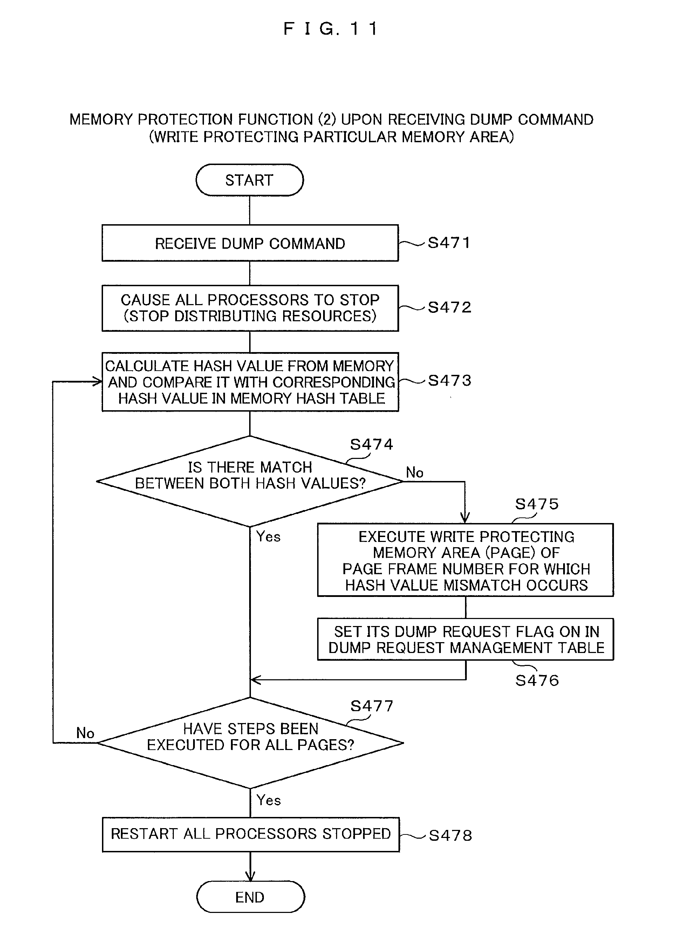

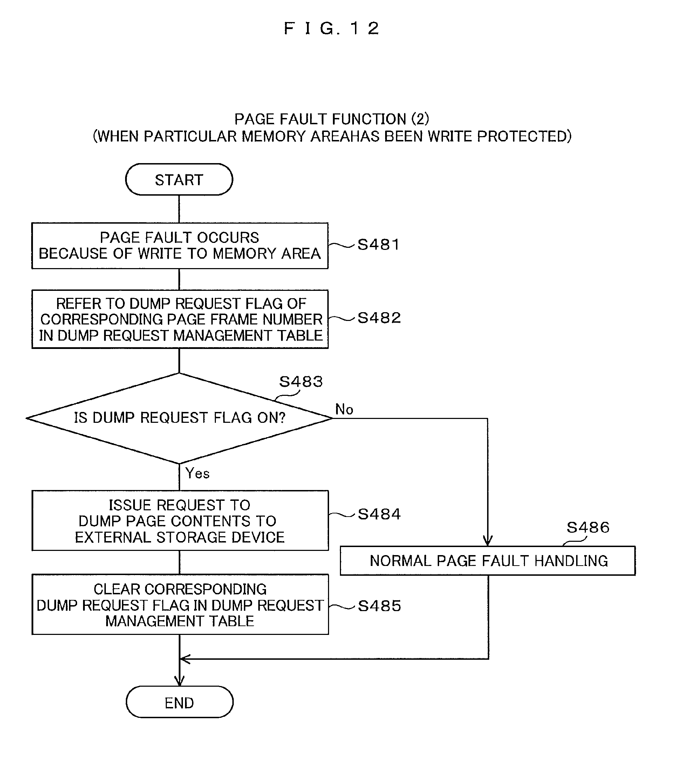

### (Method 2, Figs. 11 and 12)

(1) Process receives a dump request from a user (S471).
(2) Process calculates a page No. and a hash value for all memory areas and compares the hash value with a corresponding hash value stored in the memory hash table (S473).
(3) As a result of the comparison, if there is a match between both hash values, the process does not write protect the page; if there is a mismatch between both hash values, the process write protects the page (S474 to S475).
(4) Process sets a dump request flag ON for the write protected page (S476).
(5) When a page fault exception has occurred, the process dumps the page (S481 to S485).

### (Method 1: Write protecting all areas)

Fig. 9 is a diagram explaining a process of write protecting all memory areas as the memory protection function upon receiving a dump command (in this case, flags are preset).

When having received a dump command (S451), the process immediately causes all processors 120 to stop writing to the memory areas so that no change is made to the memory images at the time when the process has received the dump command (S452).

Then, the process executes write protecting each memory area on a per-page basis (S453). According to a write protection instruction of the OS, the process sets the relevant dump request flag 802 to 1 in the dump request management table 800 (S454). In the present embodiment, to a dump request flag 802, 0 is assigned to indicate that a dump request is not issued and 1 is assigned to indicate that a dump request is issued. The process executes the steps 453 to S454 for all memory areas (S455).

After the execution of the steps 453 to S454 for all memory areas, the process causes all processors 130 stopped at S452 to restart writing to all the memory areas (S456).

Fig. 10 is a diagram explaining the page fault handling function, when all memory areas were write protected by the process as the write protection function upon receiving a dump command. When a write to a memory area that was write protected at S453 in Fig. 9 has occurred because of the execution of the operating system 110, a task program 120 or the like, a page fault exception occurs (S461).

The process refers to a dump request flag 802 mapped to the page frame number of the page in which the page fault exception has occurred in the dump request management table 800 (S462). If the dump request flag 802 is 1, the process calculates a hash value of the page in which page fault exception has occurred and compares the hash value with a hash value mapped to the corresponding page frame number in the memory hash table 111 (S463) (S464).

If there is a match between both hash values of the page in which the page fault exception has occurred, it is regarded that no write has been done to the area after the updates of the memory hash table 111 and the external storage device 200 were executed, and it can be said that the memory image of the area is the same as the image dumped to the external storage device. Thus, the process performs no dump to the external storage device and clears the dump request flag 802 mapped to the corresponding page frame number in the dump request management table 800 (S466).

If there is a mismatch between both hash values of the page in which the page fault exception has occurred, it is regarded that a write to the area has been done after the updates of the memory hash table 111 and the external storage device 200 were executed and it can be said that the memory image of the area differs from that dumped to the external storage device. Thus, the process issues a request to dump the page contents to the external storage device (S465) and clears the dump request flag 802 mapped to the corresponding page frame number 801 in the dump request management table 800 (S466). In addition, the process updates the hash value of that page in the memory hash table 11 to the calculated value.

If the dump request flag 802 is 0, the page fault exception that has occurred is caused by write protection applied by memory management of the operating system 110, but not caused by write protection applied on the memory at S453 in Fig. 9. Thus, the process executes normal page fault handling provided by the operating system 110 (S467).

By using the memory hash table, the page fault handling function unit determines whether the memory image is the same as or differs from the image dumped to the external storage device and dumps only an area required to be dumped; in this way, the dump time can be reduced.

### (Method 2: Write protecting a particular area)

Fig. 11 is a diagram explaining a process of write protecting a particular memory area as the memory protection function upon receiving a dump command (in this case, a flag is set according to a hash during processing).

When having received a dump command (S471), the process immediately causes all processors 130 to stop writing to a particular memory area so that no change is made to its memory image at the time when the process has received the dump command (S472).

Then, the process calculates a hash value of the memory and compares the calculated hash value with a hash value mapped to the corresponding page frame number in the memory hash table (S473) (S474).

If there is a match between both hash values, it is regarded that no write has been done to the area after the updates of the memory hash table and the external storage device were executed and it is not required to dump the memory image to the external storage device. Thus, the process sets the dump request flag 802 to 0.

If there is a mismatch between both hash values, it is regarded that a write has been done to the area after the updates of the memory hash table 111 and the external storage device 200 were executed. Thus, the process executes write protecting the page corresponding to the area (S475) and sets the dump request flag 802 mapped to the corresponding page frame number 801 to 1 in the dump request management table 800 (S476).

The process executes the steps S453 to S456 for all pages (S477) and causes all processors stopped at S471 to restart writing to all the memory areas.

Fig. 12 is a diagram explaining the page fault handling function, when a particular memory area was write protected by the process as the write protection function upon receiving a dump command. When a write to a memory area that was write protected at S475 in Fig. 11 has occurred because of the execution of the operating system 110, a task program 120, or the like, a page fault exception occurs (S481).

The process refers to a dump request flag 802 mapped to the page frame number of the page in which the page fault exception has occurred in the dump request management table 800 (S482) (S483).

If the dump request flag 802 is 1, it means that a write has been done to the area of the page that was write protected at S475 in Fig. 11 because of a mismatch between both hash values. Hence, the image of the memory area is not the same as the image dumped to the external storage device. Thus, the process issues a request to dump the page contents to the external storage device (S484) and sets the corresponding dump request flag 802 to 0 in the dump request management table 800 (S485).

If the dump request flag 802 is 0, which means a match between both hash values, then the page fault exception that has occurred is caused by write protection applied by memory management of the operating system 110, not caused by write protection applied on the memory at S455. Thus, the process executes normal page fault handling provided by the operating system 110 (S486).

By using the memory hash table, the memory protection function unit, upon receiving a dump command, write protects only a memory area required to be write protected; in this way, the dump time can be reduced.

As described previously, the page fault handling function unit or the memory protection function unit dumps only an area required to be dumped or write protects only a memory area required to be write protected; either can achieve faster dumping at which the present method aims.

However, because the method in which the memory protection function unit write protects only a memory area required to be write protected is performed in the state in which all processors stop writing to a particular memory area, the system stop time becomes longer as compared with the method in which the page fault handling function unit dumps only an area required to be dumped, but processing to stop writing is simple. Therefore, the method in which the page fault handling function unit dumps only an area required to be dumped is preferable to shorten the processing time.

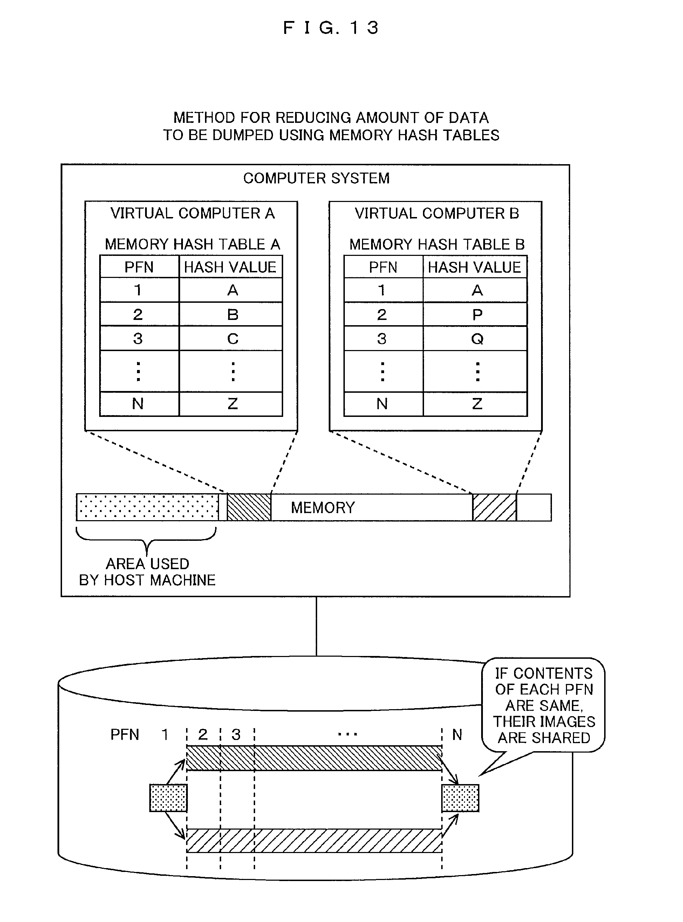

Fig. 13 is a diagram explaining a method for reducing the amount of data to be dumped using memory hash tables. In a case where a plurality of virtual computers have been activated using a virtualization mechanism, when a dump command has been issued to all the virtual computers, a large amount of memory images would be dumped to the external storage device.

To reduce the amount of memory images to be dumped, when executing dump output to the external storage device, a physical computer compares hash values in the memory hash tables of the respective virtual computers, dumps a memory image of only one of page frames (with a page frame number between 1 and N) mapped to the same hash value, and causes both virtual computers to share the memory image.

While hereinbefore embodiments have been described specifically based on the embodiments, they should not be limited thereto and can be modified in various ways without departing from the scope thereof.

### Reference Signs List

10: Computer system, 20: Memory, 110: Operating system, 111: Memory hash table, 112: Memory hash table initialization function, 113: Function of initial dump to external storage, 114: Memory hash table update function, 115: Hash value comparison function, 116: Dump output function, 120: Task program, 130: Processor, 140: Communication interface, 200: External storage device

## Claims

1. A memory dump collection method for a memory in a computer to which a storage device in which data on a per-page basis is stored is connected,
wherein the memory dump collection method receives a dump request from a user;
write protects every page of all memory areas;
sets a dump request flag ON with respect to each of all the memory areas;
upon occurrence of a page fault exception when the memory is accessed, calculates a hash value of the page in which the page fault exception has occurred and compares the hash value with a corresponding hash value stored in a memory hash table in which hash values of data contained in respective pages have been stored; and
as a result of the comparison, if there is a match between both hash values, does not dump the page, and if there is a mismatch between both hash values, dumps the page.

2. A memory dump collection method for a memory in a computer to which a storage device in which data on a per-page basis is stored is connected,
wherein the memory dump collection method receives a dump request from a user;
calculates a page number and a hash value with respect to each of all memory areas and compares the hash value with a corresponding hash value stored in a memory hash table in which hash values of data contained in respective pages have been stored;
as a result of the comparison, if there is a match between both hash values, does not write protect the page, and if there is a mismatch between both hash values, write protects the page;
sets a dump request flag ON for the write protected page; and
dumps the page upon occurrence of a page fault exception in the page.

3. An information processing apparatus that processes data in virtual memory of an operating system on a per-page basis,
wherein a management table that stores calculation results obtained by calculating a hash of each page of memory areas of the operating system;
memory hash table initialization means for executing initialization of hash values which are calculated from contents of page frames which are stored in the management table;
memory hash table update means for , when a change is made to a system memory resulting in a mismatch between a hash value stored in the management table and the system memory, updating the hash value stored in the management table and updating a relevant memory image stored in an external storage device;
hash value comparison means for, upon request by a dump command, comparing a hash value in the management table with a corresponding hash value of the system memory and issuing a dump request to dump only a memory area for which the hash values do not match; and
dump output means for executing a dump request which is issued by the hash value comparison function.

4. The information processing apparatus according to claim 3,
wherein upon issuance of a dump command, the hash value comparison means compares a hash value in the management table with a corresponding hash value of the system memory, and only if the hash values do not match, a relevant part of the contents of the system memory is dumped to the external storage device.

5. The information processing apparatus according to claim 3, further comprising memory protection means for, upon issuance of a dump command, comparing a hash value in the management table with a corresponding hash value of the system memory and write protecting only a memory area required to be write protected according a result of the compassion.

6. The information processing apparatus according to claim 3, further comprising page fault handling means for, upon occurrence of a page fault exception, comparing a hash value in the management table with a corresponding hash value of the system memory and dumping only a memory area required to be dumped to the external storage device according to a result of the comparison.

7. The memory dump collection method according to claim 1 or 2, wherein the information processing apparatus, if activating and running with a plurality of virtual computers, when executing a dump to the external storage device, compares hash values in memory hash tables respectively held by the virtual computers, dumps a memory image of only one of page frames mapped to the same hash value, and causes both the virtual computers to share the memory image.
